# EUROPEAN PATENT SPECIFICATION

(11) **EP 1 066 626 B1**
(45) Date of publication and mention of the grant of the patent: **21.05.2003**
(21) Application number: 99910634.7
(22) Date of filing: 24.03.1999
(51) Int. Cl.: G10L 15/06

(54) **SPEECH RECOGNITION DICTIONARY ENLARGEMENT USING DERIVED WORDS**
ERWEITERUNG EINES SPRACHERKENNUNGSWORTSCHATZES UNTER VERWENDUNG VON ABGELEITETEN WÖRTERN
EXTENSION DE DICTIONNAIRE DE SYSTEME DE RECONNAISSANCE VOCALE AU MOYEN DE MOTS DERIVES

(30) Priority: 27.03.1998 US 79706 P
(43) Date of publication of application: 10.01.2001
(73) Proprietor: Lernout & Hauspie Speech Products N.V., 8900 Ieper (BE)
(72) Inventor: SCHOOFS, Koen, B-3050 Haasrode (BE); GALLOPYN, Guido, B-9620 Zottegem (BE)
(74) Representative: Froud, Clive
(86) International application number: IB9900673
(87) International publication number: WO99050829

(56) References cited:
- EP-A- 0 241 717
- US-A- 5 442 547
- FESSELER P ET AL: "AUTOMATIC VOCABULARY EXTENSION FOR A SPEAKER-ADAPTIVE SPEECH RECOGNITION SYSTEM BASED ON CVC UNITS" PROCEEDINGS OF THE EUROPEAN CONFERENCE ON SPEECH COMMUNICATION AND TECHNOLOGY (EUROSPEECH), PARIS, SEPT. 26 - 28, 1989, vol. 1, no. CONF. 1, 26 September 1989 (1989-09-26), pages 75-78, XP000209282 TUBACH J P;MARIANI J J

## Description

### Technical Field

The present invention relates to speech recognition systems, and more particularly to dictation systems.

### Background Art

In a dictation system, it is common to utilize a dictionary of vocabulary words that are capable of being recognized by the system. A common feature is the ability of the user to add words to the system vocabulary. The addition of a word is achieved by having the user type or spell a word, the phonetic transcription is retrieved or generated, and the word can from then on be recognized by the dictation system. The only word that is added is the word as it is typed by the user.

It is also common for a dictation system to employ two dictionaries. One dictionary, termed the "active dictionary" in this description and the following claims, is the dictionary containing the active vocabulary that is recognized by the system. Another dictionary, termed the "background dictionary" in this description and the following claims, is typically a substantially larger dictionary, from which most, if not all, of the active dictionary's vocabulary is selected. The background dictionary is typically created in a laboratory.

The paper by W. Fesseler et al., "Automatic Vocabulary Extension for a Speaker-Adaptive Speed recognition system based on CVC units", EUROSPEECH 89, vol 1, p 75-78 discloses the generation of word modes for a speech recognition system, covering different pronunciations of a given word.

### Summary of the Invention

A preferred embodiment of the present invention provides a method of enlarging a dictionary of a speech recognition system. Such a dictionary associates a phonetic transcription with each word. The method of this embodiment includes:
a. specifying a word to be entered into the dictionary;
b. identifying a set of words that includes the specified word and at least one derivative thereof, the set having at least two members;
c. adding, to the dictionary, desired members of the set, along with a phonetic transcription of each such desired member.

The derivatives may be generated automatically using rules. In one further embodiment, the dictionary may be a background dictionary for the speech recognition system, and, for example, the background dictionary may be generated in a laboratory. Alternatively, the dictionary may be an active dictionary. In an embodiment, a characteristic category associated with the specified word may be generated, by the user or by a category-based generator, as an aid in identifying the derivatives. The method may include as part of step (c) selecting the desired members of the set to be added to the dictionary along with their phonetic transcriptions. When the dictionary is an active dictionary and the specified word is not in a background dictionary of the speech recognition system, rule-based generation is. of particular applicability. Alternatively, or in addition, when the dictionary is an active dictionary, the generation of derivatives may be achieved using a derivative dictionary that has links to identify words that are derivatives of a common root. One way of providing a derivative dictionary is to use a background dictionary that is structured to provide the derivative dictionary.

In another embodiment, step (c) of the method may include associating occurrence probability data with each desired member. The step of associating occurrence probability data may include referring to a background dictionary containing such data. Alternatively, the step of associating may include referring to a rule-based generator. In a further embodiment, the rule-based generator may generate occurrence probability data for each desired member as a function of a known characteristic of such member. Such a known characteristic may be the word category of such member. Alternatively, another embodiment may associate occurrence probability data by assigning a default value.

In addition to, or alternatively, an embodiment, in step (c), may associate differentiating characteristics of the at least one derivative, such as hints or suggestions to help the system differentiate the at least one derivative from similar sounding words. The distinguishing hints may be generated automatically, looked up in a dictionary, or provided by the user,

In a related embodiment, there is provided an improved speech recognition system of the type permitting enlargement of a dictionary that associates a phonetic transcription with each word. The improvement includes:
a. an input for specifying a word to be entered into the dictionary;
b. a derivative generator for identifying a set of words that includes the specified word and at least one derivative of the specified word; and
c. an update arrangement for adding to the dictionary desired members of the set, along with a phonetic transcription of each such desired member.

In a further embodiment, the derivative generator is rule-based so as to use rules to generate the at least one derivative automatically. As described above, the dictionary may be a background dictionary. Alternatively, the dictionary may be an active dictionary. In an embodiment, the derivative generator may utilize word category information from either a rule-based category generator, or from a second user controlled input, as an aid in generating the at least one derivative. As a further embodiment, the update arrangement may include a user selection interface so as to enable a user to select ones of the at least one derivative and the specified word that are desired to be added to the dictionary. When the dictionary is an active dictionary and the specified word is not in a background dictionary of the speech recognition system, rule-based generation is of particular applicability. Alternatively, or in addition, when the dictionary is an active dictionary, the derivative generator may use a derivative dictionary that has links to identify words that are derivatives of a common root. One way of realizing the derivative dictionary is to provide a background dictionary that is structured to provide the derivative dictionary.

In a further related embodiment, the update arrangement of the system may include a probability quantifying arrangement for associating occurrence probability data with each desired member. The probability quantifying arrangement may refer to a background dictionary containing such data. Alternatively, the probability quantifying arrangement in an embodiment may use a rule-based generator. In a further embodiment, the rule-based generator may generate occurrence probability data for each desired member as a function of a known characteristic of such member. Such a known characteristic may be the word category of such member. Alternatively, the probability quantifying arrangement may assign a default value for each desired member.

In an embodiment, the update arrangement of the system may include a differentiating characteristic arrangement for associating differentiating characteristics of the at least one derivative, such as hints or suggestions to help the system differentiate the at least one derivative from similar sounding words. The distinguishing hints may be generated automatically, looked up in a dictionary, or provided by the user.

The invention also provides a novel user interface for adding words, where the user has the option to classify, for example, grammatically or otherwise, the word that is being added.

### Brief Description of the Drawings

The present invention will be more readily understood by reference to the following detailed description taken with the accompanying drawings, in which:
Fig. 1 illustrates the logical flow associated with a speech recognition system permitting enlargement of a dictionary in accordance with a preferred embodiment of the invention;
Figs. 2-4 illustrate alternative dictionary structures associated with related words;
Fig. 5 illustrates a speech recognition system permitting enlargement of a dictionary in accordance with an embodiment of the invention in which no background dictionary is present;
Fig. 6 illustrates a speech recognition system permitting enlargement of a dictionary in accordance with an embodiment of the invention wherein derived forms are retrieved exclusively using links in the background dictionary structure;
Fig. 7 illustrates the use by prior art of word occurrence probability data in speech recognition systems;
Figs. 8 and 9 illustrate alternative methods of employing word occurrence probability data in a speech recognition system permitting enlargement of a dictionary in accordance with an embodiment of the invention; and
Fig. 10 illustrates an alternative embodiment of the present invention utilizing word distinguishing hints linked to each word data structure.

### Detailed Description of Specific Embodiments

The present invention takes advantage of the discovery that it is valuable when entering a word into the dictionary of a dictation system to enter also other words that are derived from the root form of the word. In this manner, assuming that derivatives of a noun have been entered in a dictation system, the occurrence of a plural will also be capable of being recognized if the singular is capable of being recognized. For the purposes of the description and claims of the present application, we use the terms "derivative" or "derived form" to refer to any word that may be derived from the root form of a given word, or, if different from the given word, the root form itself. For example, in the case of a verb, all conjugate forms may be derived, including singular, plural, past tense, past participle, etc. In the case of a noun or adjective, the singular, plural, diminutive forms, plus all declined forms and compound forms may be derived. Included in the meaning of the term "derivative" are words generated by adding a prefix to a root, such as "un-" in English to generate words like "unmask" and "uncomfortable" from the verb "mask" and the adjective "comfortable".

Until now, dictionaries included in dictation systems typically do not include information that relates one form of a word to another form of that same word. For example, there is no indication that one word might be the plural of another word. In accordance with the present invention, when a user adds a certain word to the recognition system, derivatives of that word are also presented to the user as candidates for being added to the recognition system. These derived forms can be retrieved from links that are added for this reason to the dictionaries or they can generated on the spot for words that are not in the dictionaries. Not that the word entered by the user needs to be a special or root form of the word-from any derived form all other derivatives may be generated. The present invention may be employed in speech recognition systems including those for discrete and continuous dictation.

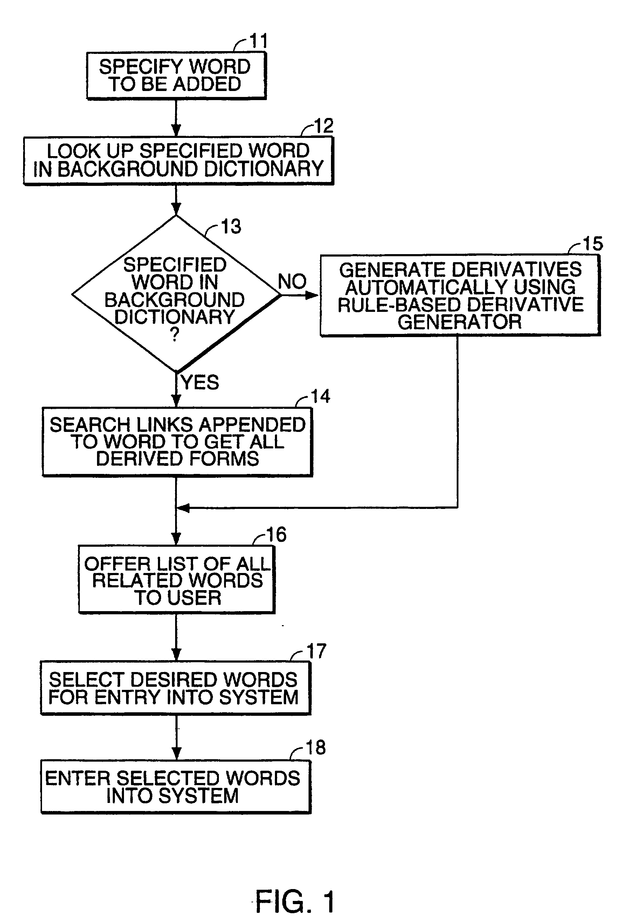

Fig. 1 illustrates the logical flow associated with a speech recognition system permitting enlargement of a dictionary in accordance with a preferred embodiment of the invention. In this embodiment, the user specifies, in accordance with step 11, a word to be added to the system. In accordance with step 12, the system looks up the specified word in a background dictionary. If, in step 14, the specified word is in the dictionary, the links appended to the specified word in the dictionary, are searched in order to get all derived forms of the word. If the word is not found in the dictionary, in step 15 all derived forms are generated automatically using a rule-based derivative generator. In accordance with step 16, a list of related words is offered to the user, who, in step 17, selects the desired ones, which are then, in step 18, activated for recognition on the dictation system.

Certain rules may be turned on or off at the user's discretion. This can happen in the derivative generator, in step 15, by direct action of the user, or indirectly, through hints given by the user ("this word is a verb"), so all rules related to nouns are disabled for this word). Not all words generated need to be actual independently existing words. In step 16, the user may be asked to validate the generated words, or alternatively, they may be looked up in a dictionary to check whether they actually exist, or, indeed, in a further embodiment, step 16 may be skipped and they may be added anyway, regardless of their existence.

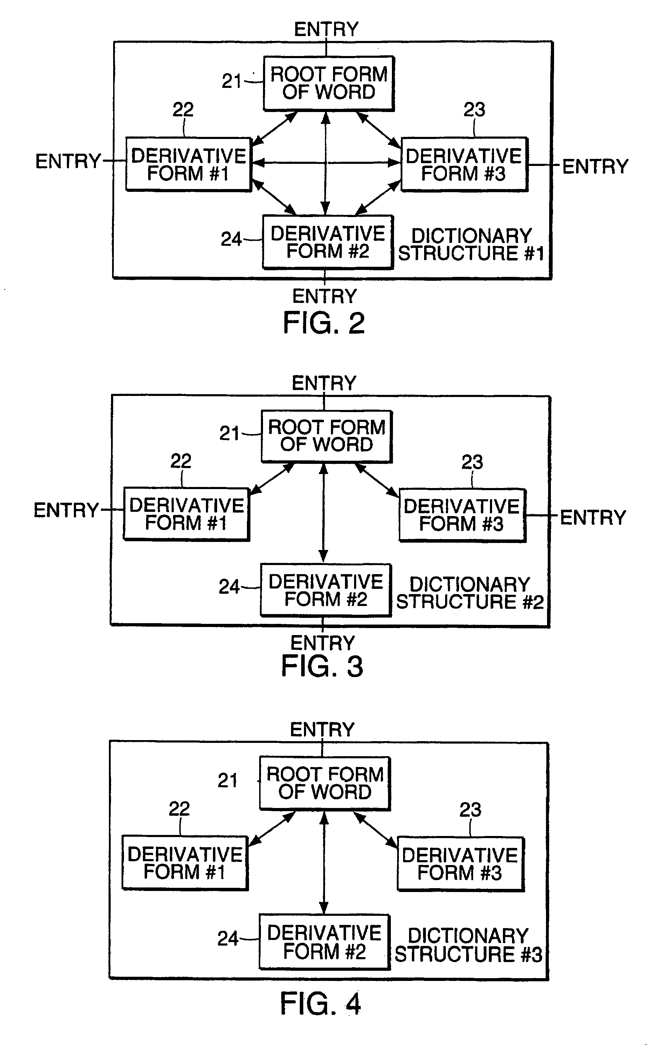

Several possible dictionary structures may be utilized in accordance with embodiments of this invention. Examples of these structures are shown in Figs. 2 through 4.

Dictionary structure 1 is shown in Fig. 2, which illustrates the links among a group of related words. The dictionary contains separate entries for each derived form of the word. It may contain the phonetic transcription of each of these words. Each word may contain links to all other words which are derived from it, or which are derived from a common form. Thus, all related forms 21-24 are provided as entries in the dictionary, and a given root form 21 may have links to each derived form 22, 23 and 24, and each derived form has a link to the root form and each of the other derived forms.

Dictionary structure 2 is shown in Fig. 3, which illustrates an alternative method of linking a group of related words. The dictionary contains separate entries for each derived form of the word. It may contain a phonetic transcription of each of these words. Each word contains a link to a certain root form (which need not be present as a word in the dictionary, since certain words have a root form which is not an independently existing word, *e.g*., "disgruntled"). This root form then contains links to all words which are derived from it. Thus, all related forms 21-24 are provided as entries in the dictionary, and a given root form 21 may have links to each derived form 22, 23 and 24, but the derived forms are not directly linked with each other.

Dictionary structure 3 is shown in Fig. 4, which illustrates another alternative method of linking a group of related words. The dictionary has entries only for the root form (as is common for printed dictionaries), but this entry contains all derived forms in its associated data structure. All forms may be accompanied by their phonetic transcription. Thus, a dictionary entry exists for each given root form 21, which may have links to each derived form 22, 23 and 24, but the derived forms are not directly linked with each other, nor do they occur as entries in the dictionary.

While the invention in the embodiments described above provides a valuable feature for English dictation systems, in the case of heavily inflected languages, embodiments of the invention may in fact be necessary to make the ability of the user to add words to the dictation system a useful feature. For example, in Spanish and Korean a verb can take many different forms, while in German and Japanese words can have many different declensions.

The invention may also be realized in the following embodiments.

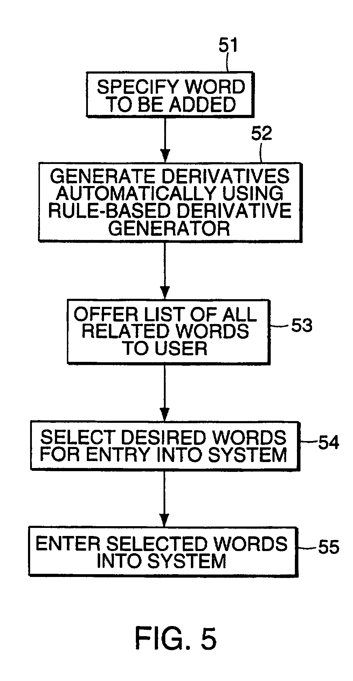

A system, as in Fig. 5, may have no background dictionary present, so the derived forms are always generated on the spot. In this embodiment, the user specifies, in accordance with step 51, a word to be added to the system. In accordance with step 52, all derived forms are generated automatically using a rule-based derivative generator. In accordance with step 53, the list of all related words is offered to the user, who, in step 54, selects the desired ones, which are then, in step 55, entered into the dictionary for use in the speech recognition system.

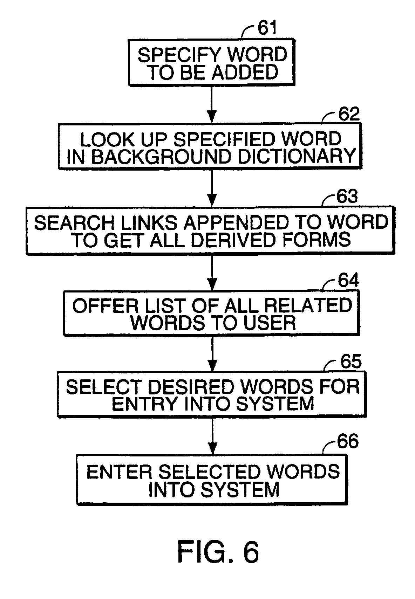

A system, as in Fig. 6, may not use a rule-based derivative generator, and derived forms may be retrieved exclusively using links in the dictionary structure. In this embodiment, the user specifies, in accordance with step 61, a word to be added to the system. In accordance with step 62, the system looks up the specified word in a background dictionary. In step 63, the links appended to the specified word in the dictionary are searched in order to get all derived forms of the word. In accordance with step 64, the list of all related words is offered to the user, who, in step 65, selects the desired ones, which are then, in step 66, entered into the dictionary for use in the speech recognition system.

A system, similar to the embodiment illustrated in Fig. 1, may not allow the user to choose which of the derived forms are to be activated, and which are to be left out. In other words, steps 16 and 17 are not performed. Such a system might always include all derived forms, or only the most common derivations.

A system may be similar to the embodiment illustrated in Fig. 1, but, in step 11, the user may select the word to be added by some other means than typing or spelling it-for example, by selecting the word out of a list of words.

A system may be similar to the embodiment in Fig. 1, and also have an active dictionary as the dictionary to be enlarged, and a background dictionary may also be present. In this embodiment, in step 15, the derived forms of the word are generated by a tool, but the phonetic transcriptions of the word are retrieved from the background dictionary. Alternatively, regardless of whether there is a background dictionary, the phonetic transcriptions may not be relevant so are not obtained.

A system may be similar to the embodiment in Fig. 1 and also have each word to be entered into the system stored as part of a data structure which includes one or more additional differentiating characteristics associated with each such word. In such an embodiment, some of the differentiating characteristics of the word may be associated with the word in the form of a "hint" which a speech recognition system may use to distinguish between similar sounding utterances if the hint is then furnished by the user. For instance, in French, the third person plural of a verb is commonly formed by adding the suffix "ent" to the root form of the verb. In such an embodiment, the data structure associated with the third person plural derivative of the root verb would also be linked to a distinguishing hint such as "ends in 'ent'" or "third person plural." The hints may then be used to distinguish between similar sounding words, as described in application number 09/159,838, filed September 24,1998, for our invention entitled "User Interface to Distinguish Between Same Sounding Words in Speech Recognition."

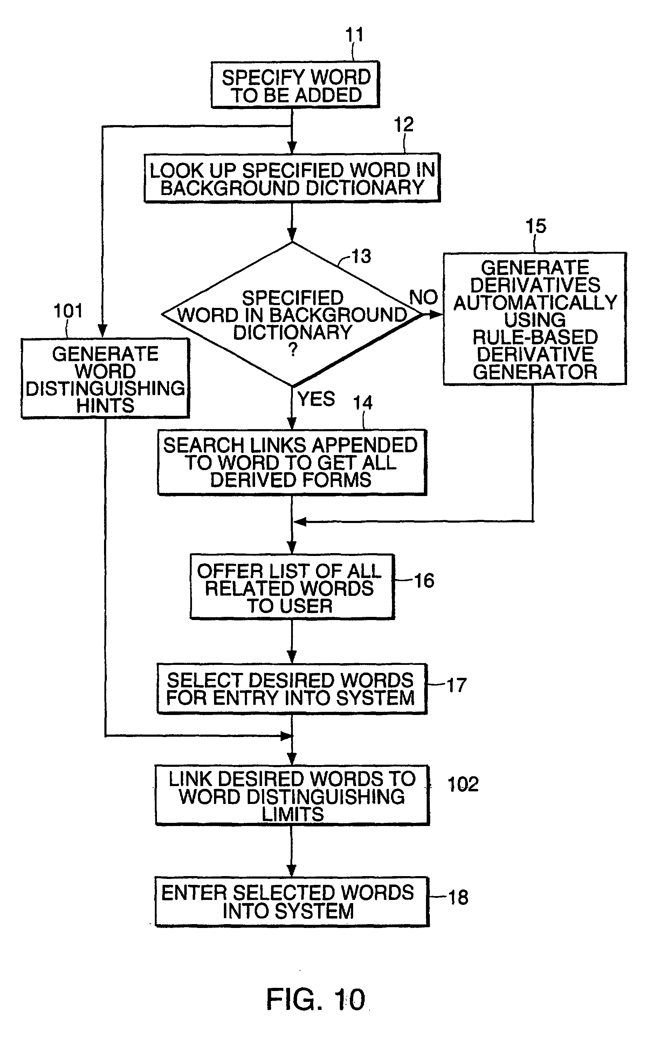

In an embodiment illustrated in Figure 10, the differentiating characteristics may be generated by a rule-based generator that is separate from the one used to generate the word derivatives. After specifying the word to be added in step 11 of Figure 10, in addition to generating derivatives to be added in steps 12-17, a separate rule-based generator may generate word-distinguishing hints in step 101. These hints may then be linked to each word desired to be entered into the system in Step 102, just before the word is entered into the system in step 18. Of course, alternative embodiments may perform the hint generating and linking of the hints to the words at other locations in the flow chart.

In another embodiment which looks up the derived forms of the specified word in a background dictionary, as illustrated in Fig. 6, distinguishing hints may also be associated with each word listed in the background dictionary. The distinguishing hints would then be added to the system along with desired derived forms. In an alternative embodiment, the distinguishing hints could be provided by the user.

The user interface, in Fig. 1, may be, in steps 11, 16 and 17, speech-recognition and speech-synthesis based; or windows-, mouse- and keyboard-based. The user, in step 11, may specify a word (by typing or orally spelling or by other means), whereupon the word and some or all derived forms are displayed in the embodiment. The user may be asked, as a part of step 15, to categorize the word to be added - for example, is it a verb, a noun, adjective, a loan-word, a medication? - to help find the correct set of derivation rules to be used. Alternatively, in step 15 the system may automatically assign a word to a certain category, for example, based on a certain rule set. Next, in steps 16 and 17, the user may be provided the option to select (using mouse, keyboard or voice) the words to add to the system. As a default, or in lieu of such an option, all or the most common forms are added by default, skipping steps 16 and 17. In the case of a default entry, as a further embodiment, the user may be provided the option to select beforehand what types of derivatives should be allowed in step 15, and which should not be considered (for example, no past tenses of verbs, etc.).

The derivative generator tool (Fig. 1, step 15) may be, for example, an expert system that makes use of a linguistic rules set to derive all, or certain, derivatives of a word. This rules set may be hard-coded in the tool, or the tool may be reconfigurable to load in different rule sets at runtime. In a further embodiment, the specified word is converted first to a root-form, and all derived forms are then derived from this root-form. The rule set is preferably language specific even though certain rules may be used in more than one language .

It will be appreciated that the invention and the dictation system to which it relates may be implemented in software that is designed to be run on a general purpose computer, or, alternatively, may be embedded in a specially designed system that is hard-wired and includes items that are stored in read-only memory or may be implemented in some combination of software on a general purpose hardware platform with an embedded application.

In yet another embodiment, the present invention addresses statistical data pertinent to speech recognition. In many, if not most large vocabulary speech recognition systems, the recognition engine utilizes data concerning the probability that a word can occur as the next word in a text. Normally probability data are determined by taking an extraordinarily large amount of text, and counting the number of times a word occurs (possibly even the number of times the word occurs after a certain other word). This probability data pertinent to a given word can be stored together with the word in the language model, active dictionary or even background dictionary. If a word is taken from the background dictionary, and added to the active dictionary, its statistics may be retrieved from the background dictionary. However, if a completely new word is being added to the system, no information about the likelihood of the word occurring in the text is available. Up to now this problem has been solved by giving the word a default starting probability, which can be based on, for example, the number of words already in the system, or, the category of the word-for example, is it a name, a verb, etc.-since each category can have its own statistics, etc. This starting probability is then adapted based on the actual use of the word during dictation.

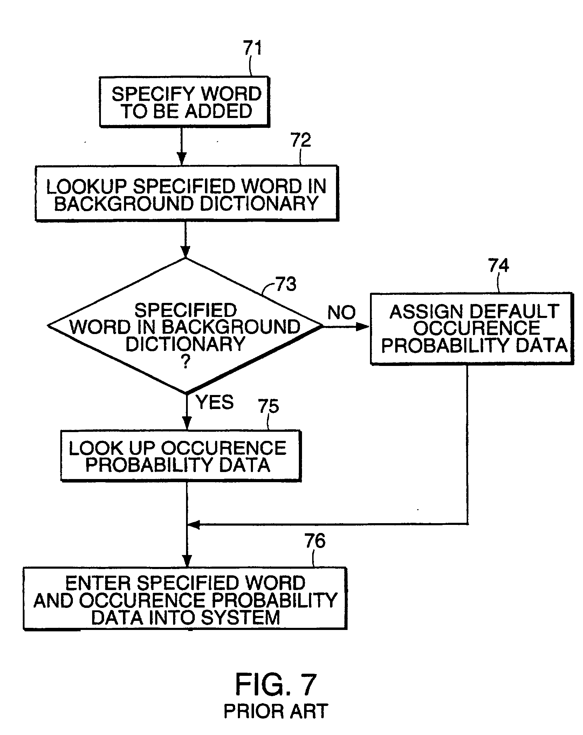

Fig. 7 illustrates the logical sequence associated with assigning the word occurrence probability data in a speech recognition system based on such previously existing methods. In such a system, the user specifies, in accordance with step 71, a word to be added to the system. In accordance with step 72, the system looks up the specified word in a background dictionary. If, in step 75, the specified word is in the dictionary, the occurrence probability data stored in the dictionary is assigned to the specified word. If the specified word is not found in the dictionary, in step 74 a default value of occurrence probability data is assigned to the specified word. In accordance with step 76, the word and its occurrence probability data are then entered into the system.

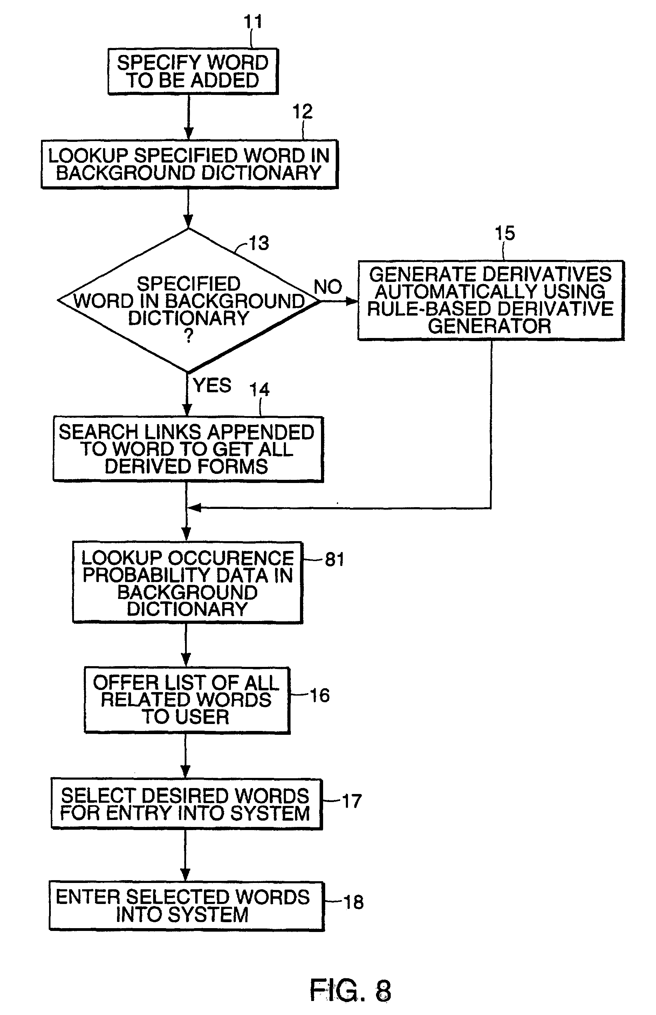

In embodiments of the present invention, it is possible to add not just one word, but a whole range of words. A number of possibilities exist to find the starting probabilities for all these words. In one embodiment, the probability for each word may be determined by a lookup in the background dictionary. Fig. 8 illustrates an embodiment showing how the basic system of Fig. 1 may be modified to accomplish such a function. Once the derived forms are determined in steps 14 and 15, the system, in step 81, looks up occurrence probability data for each word form in a background dictionary. Operation of the system may then continue as in Fig. 1, beginning from step 16 offering the list of related words to the user. In another embodiment, in step 81, each word may be added to the system with a default probability, the same for every word. Alternatively, each word, in step 81, may be added to the system with a probability related to its category (different for verbs, nouns, names, etc).

In another embodiment, if a rule-based approach is used to generate words, it is possible to utilize known characteristics of the derived word, for example, whether the derived word is a noun in the singular or a past participle, a feminine or a plural (French). From this, something can be inferred about the likelihood of the word occurring. In French, a feminine plural past participle is probably more rare than any other form, since it is only used when talking about a group of exclusively female persons (or objects). In Japanese, the polite form of a verb may be more likely than the normal present tense.

Hence, the rules that are used to derive words may also be utilized in assigning a probability to the derived word. Such an approach permits the assignation of more accurate, and therefore useful, probabilities for words than probabilities based only on category. In this case two forms of a verb in the same category could still get a different probability.

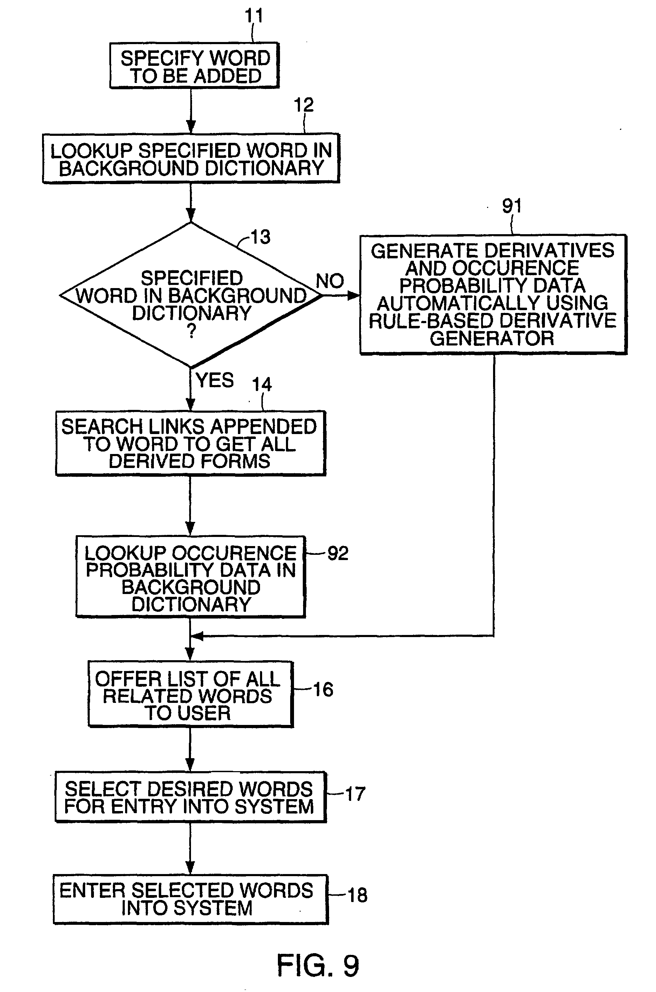

Fig. 9 illustrates an embodiment showing how such a system may be adapted from the basic system of Fig. 1. If the specified word were present in the background dictionary in step 13, the system would, in step 14, search the links appended to the word to get all derived forms, and then, in step 92, lookup the occurrence probability data in the dictionary, before offering the list of all related words to the user in step 16. If the specified word were not present in the background dictionary in step 13, the rule-based derivative generator, in step 91, would automatically generate derivatives and occurrence probability data, before offering the list of all related words to the user in step 16.

The rules, in step 91, may be used to generate probabilities that later on need to be modified to account for the probability of the category to which a word belongs. For example, the plural form of a noun may well have a different probability from that of the singular form, regardless of category. These probabilities may then be modified based on category. For example, if the derived words turn out to belong to the category of rare medical utensils, both probabilities (for the plural and the singular forms) should be lowered to account for this. Alternatively, in step 91, the rules could generate probabilities that are used unmodified.

In a further embodiment, the original word that was entered by the user would get the highest probability. The probabilities of all derived words may (optionally) be normalized to fall below this probability. The user may be asked for hints to classify the original word (or derivatives) in order to get a more accurate estimate of the probability of the original word and its derived forms. In such an embodiment, the normalization described might occur in step 81 of Fig. 8 when the occurrence probability data is looked up in the background dictionary.

In other embodiments, the addition of occurrence probability data, depicted in step 81 of Fig. 8, could occur at any point in the logical sequence, including, for example, after the selection step 17.

## Claims

1. A method of enlarging a dictionary of a speech recognition system, the dictionary associating with each word therein a phonetic transcription, the method comprising:
a. specifying a word to be entered into the dictionary;
**characterized by**
b. identifying a set of words that includes the specified word and at least one derivative thereof, the set having at least two members;
c. adding to the dictionary desired members of the set, along with a phonetic transcription of each such desired member.

2. A method according to claim 1, wherein step (b) includes using rules to generate the at least one derivative of the set automatically.

3. A method according to claim 2, wherein the dictionary is a background dictionary for the speech recognition system.

4. A method according to claim 1, wherein the dictionary is an active dictionary.

5. A method according to claim 4, wherein step (c) includes selecting members of the set that are desired to be added to the dictionary.

6. A method according to claim 2, wherein the dictionary is an active dictionary and the specified word is not in a background dictionary of the speech recognition system.

7. A method according to claim 1, wherein the dictionary is an active dictionary and step (b) includes utilizing a derivative dictionary that has links to identify words that are derivatives of a common root.

8. A method according to claim 7, wherein the speech recognition system has a background dictionary that is structured to provide the derivative dictionary.

9. A method according to claim 7, wherein the derivative dictionary associates distinguishing hints with words listed therein and wherein the distinguishing hints are associated with the desired members of the set which are added to the dictionary.

10. A method according to claim 1, wherein step (c) includes associating occurrence probability data with each desired member.

11. A method according to claim 10, wherein associating occurrence probability data for each desired member includes referring to background dictionary containing such data.

12. A method according to claim 10, wherein associating occurrence probability data for each desired member includes referring to a rule-based generator.

13. A method according to claim 12, wherein the rule-based generator generates the occurrence probability data for each desired member as a function of a known characteristic of such member.

14. A method according to claim 13, wherein the known characteristic is the word category of such member.

15. A method according to claim 10, wherein associating occurrence probability data includes assigning a default value.

16. A method according to claim 1, wherein step (a) also includes designating a category applicable to the word, and step (b) includes using the category as an aid in identifying at least one derivative of the specified word.

17. A method according to claim 16, wherein step (a) is performed by a user of the speech recognition system and designating a category is also performed by the user.

18. A method according to claim 17, wherein designating a category is performed by a rule-based category generator.

19. A method according to claim 1, wherein step (c) includes associating differentiating characteristics of desired member along with each desired member.

20. A method according to claim 19, wherein the differentiating characteristics are distinguishing hints.

21. A method according to claim 20, wherein the distinguishing hints are generated automatically by a set of rules.

22. A method according to claim 20, wherein the distinguishing hints are provided by the user.

23. A method according to claim 20, wherein the distinguishing hints are provided by a background dictionary.

24. An improved speech recognition system of the type permitting enlargement of a dictionary, the dictionary associating a phonetic transcription with each word, wherein the improvement comprises:
a. an input for specifying a word to be entered into the dictionary;
**characterized by**
b. a derivative generator for identifying a set of words that includes the specified word and at least one derivative thereof, the set having at least two members;
c. an update arrangement for adding to the dictionary desired members of the set, along with a phonetic transcription of each such desired member.

25. A system according to claim 24, wherein the derivative generator is rule-based so as to use rules to generate the at least one derivative of the set automatically.

26. A system according to claim 25, wherein the dictionary is a background dictionary.

27. A system according to claim 24, wherein the dictionary is an active dictionary.

28. A system according to claim 27, wherein the update arrangement includes a user selection interface so as to enable a user to select ones of the at least one derivative and the specified word that are desired to be added to the dictionary.

29. A system according to claim 25, wherein the dictionary is an active dictionary and the specified word is not in a background dictionary of the speech recognition system.

30. A system according to claim 24, wherein the dictionary is an active dictionary, and the improvement further comprises a derivative dictionary coupled to the derivative generator, wherein the derivative dictionary has links to identify words that are derivatives of a common root,

31. A system according to claim 30, wherein the speech recognition system has a background dictionary that is structured to provide the derivative dictionary.

32. A system according to claim 30, wherein the derivative dictionary associates distinguishing hints with words listed therein, and wherein the distinguishing hints are associated with the desired members added by the update arrangement.

33. A system according to claim 24, wherein the update arrangement includes a probability quantifying arrangement for associating occurrence probability data with each desired member.

34. A system according to claim 33, wherein the probability quantifying arrangement refers to a background dictionary.

35. A system according to claim 33, wherein the probability quantifying arrangement includes a rule-based generator.

36. A system according to claim 35, wherein the rule-based generator provides occurrence probability data for a given word as a function of a known characteristic of the given word.

37. A system according to claim 36, wherein the known characteristic is the word category of the given word.

38. A system according to claim 36, wherein the probability quantifying arrangement assigns a default value for each desired member.

39. A system according to claim 24, further comprising a second input for designating a word category applicable to the specified word, and wherein the derivative generator includes an arrangement for using the category as an aid in identifying at least one derivative of the specified word.

40. A system according to claim 24, further comprising a rule-based category generator coupled to the input for designating a word category applicable to the specified word, and wherein the derivative generator includes an arrangement for using the category as an aid in identifying at least one derivative of the specified word.

41. A system according to claim 24, wherein the update arrangement includes a characteristic-differentiating arrangement for associating differentiating characteristics along with each desired member of the set.

42. A system according to claim 41, wherein the differentiating characteristics are distinguishing hints.

43. A system according to claim 42, wherein the distinguishing hints are provided by the user.

44. A system according to claim 42, further comprising a rule-based generator for generating the distinguishing hints.

45. A system according to claim 42, wherein the distinguishing hints are provided by a background dictionary.

## Patentansprüche

1. Verfahren zur Vergrößerung eines Wörterbuchs eines Spracherkennungssystems, wobei das Wörterbuch jedem darin befindlichen Wort eine phonetische Transkription zuordnet, mit den Schritten:
a. Bestimmen eines in das Wörterbuch einzugebenden Worts;
**gekennzeichnet durch**
b. Identifizieren einer Wortmenge, welche das bestimmte Wort und mindestens eine Ableitung davon enthält, wobei die Menge mindestens zwei Mitglieder aufweist;
c. Hinzufügen gewünschter Mitglieder der Menge zu dem Wörterbuch, zusammen mit einer phonetischen Transkription jedes solchen gewünschten Mitglieds.

2. Verfahren nach Anspruch 1, wobei Schritt (b) die Verwendung von Regeln beinhaltet, um die mindestens eine Ableitung der Menge automatisch zu generieren.

3. Verfahren nach Anspruch 2, wobei das Wörterbuch ein Hintergrund-Wörterbuch für das Spracherkennungssystem ist.

4. Verfahren nach Anspruch 1, wobei das Wörterbuch ein aktives Wörterbuch ist.

5. Verfahren nach Anspruch 4, wobei Schritt (c) die Auswahl von Mitgliedern der Menge beinhaltet, die zu dem Wörterbuch hinzugefügt werden sollen.

6. Verfahren nach Anspruch 2, wobei das Wörterbuch ein aktives Wörterbuch ist, und das bestimmte Wort nicht in einem Hintergrund-Wörterbuch des Spracherkennungssystems vorliegt.

7. Verfahren nach Anspruch 1, wobei das Wörterbuch ein aktives Wörterbuch ist und Schritt (b) die Verwendung eines Ableitungs-Wörterbuchs beinhaltet, welches Verknüpfungen zum Identifizieren von Wörtern aufweist, die Ableitungen eines gemeinsamen Ursprungs sind.

8. Verfahren nach Anspruch 7, wobei das Spracherkennungssystem ein Hintergrund-Wörterbuch aufweist, welches so strukturiert ist, dass es das Ableitungs-Wörterbuch bereit stellt.

9. Verfahren nach Anspruch 7, wobei das Ableitungs-Wörterbuch darin aufgelisteten Wörtern Unterscheidungshinweise zuordnet, und wobei die Unterscheidungshinweise den gewünschten Mitgliedern der Menge, die zu dem Wörterbuch hinzugefügt werden sollen, zugeordnet werden.

10. Verfahren nach Anspruch 1, wobei Schritt (c) das Zuordnen von Auftrittswahrscheinlichkeitsdaten mit jedem gewünschten Mitglied beinhaltet.

11. Verfahren nach Anspruch 10, wobei das Zuordnen der Auftrittswahrscheinlichkeitsdaten für jedes gewünschte Mitglied den Rückgriff auf ein Hintergrund-Wörterbuch beinhaltet, welches solche Daten enthält.

12. Verfahren nach Anspruch 10, wobei das Zuordnen von Auftrittswahrscheinlichkeitsdaten für jedes gewünschte Mitglied den Rückgriff auf einen auf Regeln basierenden Generator beinhaltet.

13. Verfahren nach Anspruch 12, wobei der auf Regeln basierende Generator die Auftrittswahrscheinlichkeitsdaten für jedes gewünschte Mitglied als eine Funktion einer bekannten Eigenschaft eines solchen Mitglieds erzeugt.

14. Verfahren nach Anspruch 13, wobei die bekannte Eigenschaft die Wortkategorie des Mitglieds ist.

15. Verfahren nach Anspruch 10, wobei die Zuordnung der Auftrittswahrscheinlichkeitsdaten die Zuordnung eines Standardwerts beinhaltet.

16. Verfahren nach Anspruch 1, wobei Schritt (a) weiterhin die Bestimmung einer auf das Wort anwendbaren Kategorie beinhaltet, und Schritt (b) die Verwendung der Kategorie als ein Hilfsmittel zur Identifizierung mindestens einer Ableitung des bestimmten Worts beinhaltet.

17. Verfahren nach Anspruch 16, wobei Schritt (a) von einem Anwender des Spracherkennungssystems durchgeführt wird, und auch die Bestimmung einer Kategorie von dem Anwender durchgeführt wird.

18. Verfahren nach Anspruch 17, wobei die Bestimmung einer Kategorie durch einen auf Regeln basierenden Kategoriegenerator durchgeführt wird.

19. Verfahren nach Anspruch 1, wobei Schritt (c) das Zuordnen von Unterscheidungseigenschaften eines gewünschten Mitglieds zu jedem gewünschten Mitglied beinhaltet.

20. Verfahren nach Anspruch 19, wobei die Unterscheidungseigenschaften Unterscheidungshinweise sind.

21. Verfahren nach Anspruch 20, wobei die Unterscheidungshinweise automatisch durch eine Menge von Regeln erzeugt werden.

22. Verfahren nach Anspruch 20, wobei die Unterscheidungshinweise von dem Anwender bereitgestellt werden.

23. Verfahren nach Anspruch 20, wobei die Unterscheidungshinweise durch ein Hintergrund-Wörterbuch bereitgestellt werden.

24. Verbessertes Spracherkennungssystem eines Typs, der eine Vergrößerung eines Wörterbuchs ermöglicht, wobei das Wörterbuch jedem Wort eine phonetische Transkription zuordnet, wobei die Verbesserung beinhaltet:
a. eine Eingabe zur Bestimmung eines Worts, das in das Wörterbuch eingegeben werden soll;
**gekennzeichnet durch**
b. einen Ableitungsgenerator zur Identifizierung einer Wortmenge, welche das bestimmte Wort und mindestens eine Ableitung davon enthält, wobei die Menge mindestens zwei Mitglieder aufweist;
c. eine Update-Anordnung zum Hinzufügen gewünschter Mitglieder der Menge zu dem Wörterbuch, zusammen mit einer phonetischen Transkription jedes solchen gewünschten Mitglieds.

25. System nach Anspruch 24, wobei der Ableitungsgenerator auf Regeln basiert, so dass Regeln verwendet werden, um die mindestens eine Ableitung des Sets automatisch zu erzeugen.

26. System nach Anspruch 25, wobei das Wörterbuch ein Hintergrund-Wörterbuch ist.

27. System nach Anspruch 24, wobei das Wörterbuch ein aktives Wörterbuch ist.

28. System nach Anspruch 27, wobei die Update-Anordnung eine Anwender-Auswahlschnittstelle aufweist, um dem Anwender zu ermöglichen, einige der mindestens einen Ableitung und des bestimmten Worts auszuwählen, die zu dem Wörterbuch hinzugefügt werden sollen.

29. System nach Anspruch 25, wobei das Wörterbuch ein aktives Wörterbuch ist, und das bestimmte Wort nicht in einem Hintergrund-Wörterbuch des Spracherkennungssystems vorliegt.

30. System nach Anspruch 24, wobei das Wörterbuch ein aktives Wörterbuch ist, und die Verbesserung weiterhin ein Ableitungswörterbuch aufweist, welches mit dem Ableitungsgenerator verbunden ist, wobei das Ableitungs-Wörterbuch Verknüpfungen zum Identifizieren von Wörtern aufweist, die Ableitungen eines gemeinsamen Ursprungs sind.

31. System nach Anspruch 30, wobei das Spracherkennungssystem ein Hintergrund-Wörterbuch aufweist, welches so strukturiert ist, dass es das Ableitungs-Wörterbuch bereitstellt.

32. System nach Anspruch 30, wobei das Ableitungs-Wörterbuch darin aufgelisteten Wörtern Unterscheidungshinweise zuordnet, und wobei die Unterscheidungshinweise den gewünschten Mitgliedern, die durch die Update-Anordnung hinzugefügt wurden, zugeordnet werden.

33. System nach Anspruch 24, wobei die Update-Anordnung eine wahrscheinlichkeitsquantifizierende Anordnung zur Zuordnung von Auftrittswahrscheinlichkeitsdaten zu jedem gewünschten Mitglied aufweist.

34. System nach Anspruch 33, wobei die wahrscheinlichkeitsquantifizierende Anordnung auf ein Hintergrund-Wörterbuch zurückgreift.

35. System nach Anspruch 33, wobei die wahrscheinlichkeitsquantifizierende Anordnung einen auf Regeln basierenden Generator beinhaltet.

36. System nach Anspruch 35, wobei der auf Regeln basierende Generator Auftrittswahrscheinlichkeitsdaten für ein gegebenes Wort als eine Funktion einer bekannten Eigenschaft des gegebenen Worts bereitstellt.

37. System nach Anspruch 36, wobei die bekannte Eigenschaft die Wortkategorie des gegebenen Worts ist.

38. System nach Anspruch 36, wobei die wahrscheinlichkeitsquantifizierende Anordnung einen Standardwert für jedes gewünschte Mitglied zuordnet.

39. System nach Anspruch 24, weiterhin umfassend eine zweite Eingabe zur Bestimmung einer Wortkategorie, die für das bestimmte Wort anwendbar ist, und wobei der Ableitungsgenerator eine Anordnung zur Verwendung der Kategorie als ein Hilfsmittel zur Identifizierung mindestens einer Ableitung des bestimmten Worts aufweist.

40. System nach Anspruch 24, weiterhin umfassend einen auf Regeln basierenden Kategoriegenerator, der mit der Eingabe verbunden ist, zur Bestimmung einer Wortkategorie, die für das bestimmte Wort anwendbar ist, und wobei der Ableitungsgenerator eine Anordnung zur Verwendung der Kategorie als ein Hilfsmittel zur Identifizierung mindestens einer Ableitung des gewünschten Worts aufweist.

41. System nach Anspruch 24, wobei die Update-Anordnung eine eigenschaftsunterscheidende Anordnung aufweist, zur Zuordnung von Unterscheidungsmerkmalen zusammen mit jedem gewünschten Mitglied der Menge.

42. System nach Anspruch 41, wobei die Unterscheidungseigenschaften Unterscheidungshinweise sind.

43. System nach Anspruch 42, wobei die Unterscheidungshinweise von dem Anwender bereitgestellt werden.

44. System nach Anspruch 42, weiterhin umfassend einen auf Regeln basierenden Generator zur Erzeugung der Unterscheidungshinweise.

45. System nach Anspruch 42, wobei die Unterscheidungshinweise von einem Hintergrund-Wörterbuch bereitgestellt werden.

## Revendications

1. Procédé pour augmenter un dictionnaire d'un système de reconnaissance vocale, le dictionnaire associant à chaque mot qu'il contient une transcription phonétique, le procédé comprenant :
a. la spécification d'un mot qui doit être entré dans le dictionnaire ; **caractérisé par**
b. l'identification d'un ensemble de mots qui comprend le mot spécifié et au moins un de ses dérivés, l'ensemble ayant au moins deux éléments ;
c. l'ajout au dictionnaire des éléments souhaités de l'ensemble, associés à une transcription phonétique de chacun dudits éléments souhaités.

2. Procédé selon la revendication 1, dans lequel l'étape (b) comprend l'utilisation de règles pour générer automatiquement au moins un dérivé de l'ensemble.

3. Procédé selon la revendication 2, dans lequel le dictionnaire est un dictionnaire de base pour le système de reconnaissance vocale.

4. Procédé selon la revendication 1, dans lequel le dictionnaire est un dictionnaire actif.

5. Procédé selon la revendication 4, dans lequel l'étape (c) comprend la sélection des éléments de l'ensemble que l'on souhaite ajouter au dictionnaire.

6. Procédé selon la revendication 2, dans lequel le dictionnaire est un dictionnaire actif et le mot spécifié n'est pas dans un dictionnaire de base du système de reconnaissance vocale.

7. Procédé selon la revendication 1, dans lequel le dictionnaire est un dictionnaire actif et l'étape (b) comprend l'utilisation d'un dictionnaire des dérivés qui comporte des liens pour identifier les mots qui sont dérivés d'une racine commune.

8. Procédé selon la revendication 7, dans lequel le système de reconnaissance vocale comporte un dictionnaire de base qui est structuré pour fournir le dictionnaire des dérivés.

9. Procédé selon la revendication 7, dans lequel le dictionnaire des dérivés associe des indications de distinction avec des mots listés contenus dans ledit dictionnaire et dans lequel les indications de distinction sont associées aux éléments souhaités de l'ensemble qui sont ajoutés au dictionnaire.

10. Procédé selon la revendication 1, dans lequel l'étape (c) comprend l'association de données de probabilité d'occurrence à chaque élément souhaité.

11. Procédé selon la revendication 10, dans lequel l'association de données de probabilité d'occurrence pour chaque élément souhaité comprend la référence à un dictionnaire de base contenant de telles données.

12. Procédé selon la revendication 10, dans lequel l'association des données de probabilité d'occurrence pour chaque élément souhaité comprend la référence à un générateur à base de règles.

13. Procédé selon la revendication 12, dans lequel le générateur à base de règles génère les données de probabilité d'occurrence pour chaque élément souhaité comme une fonction d'une caractéristique connue d'un tel élément.

14. Procédé selon la revendication 13, dans lequel la caractéristique connue est la catégorie de mots d'un tel élément.

15. Procédé selon la revendication 10, dans lequel l'association de données de probabilité d'occurrence comprend l'affectation d'une valeur par défaut.

16. Procédé selon la revendication 1, dans lequel l'étape (a) comprend également la désignation d'une catégorie applicable au mot, et l'étape (b) comprend l'utilisation de la catégorie comme une aide dans l'identification d'au moins un dérivé du mot spécifié.

17. Procédé selon la revendication 16, dans lequel l'étape (a) est effectuée par un utilisateur du système de reconnaissance vocale et la désignation d'une catégorie est également effectuée par l'utilisateur.

18. Procédé selon la revendication 17, dans lequel la désignation d'une catégorie est effectuée par un générateur de catégorie à base de règles.

19. Procédé selon la revendication 1, dans lequel l'étape (c) comprend l'association de caractéristiques de différenciation de l'élément souhaité associé à chaque élément souhaité.

20. Procédé selon la revendication 19, dans lequel les caractéristiques de différenciation sont des indications de distinction.

21. Procédé selon la revendication 20, dans lequel les indications de distinction sont générées automatiquement par un ensemble de règles.

22. Procédé selon la revendication 20, dans lequel les indications de distinction sont fournies par l'utilisateur.

23. Procédé selon la revendication 20, dans lequel les indications de distinction sont fournies par un dictionnaire de base.

24. Système de reconnaissance vocale amélioré du type permettant l'augmentation d'un dictionnaire, le dictionnaire associant une transcription phonétique à chaque mot, dans lequel l'amélioration comprend :
a. une entrée pour spécifier un mot qui doit être entré dans le dictionnaire ; **caractérisé par**
b. un générateur de dérivés pour identifier un ensemble de mots qui comprend le mot spécifié et au moins un de ses dérivés, l'ensemble ayant au moins deux éléments ;
c. une disposition de mise à jour pour ajouter au dictionnaire les éléments souhaités de l'ensemble, associée à une transcription phonétique de chacun de ces éléments souhaités.

25. Système selon la revendication 24, dans lequel le générateur de dérivés est à base de règles de façon à utiliser des règles pour générer automatiquement au moins un dérivé de l'ensemble.

26. Système selon la revendication 25, dans lequel le dictionnaire est un dictionnaire de base.

27. Procédé selon la revendication 24, dans lequel le dictionnaire est un dictionnaire actif.

28. Système selon la revendication 27, dans lequel les dispositions de mise à jour comprennent une interface de sélection par l'utilisateur de façon à permettre à un utilisateur de sélectionner certains dérivés parmi ledit au moins un dérivé et du mot spécifié que l'on souhaite ajouter au dictionnaire.

29. Système selon la revendication 25, dans lequel le dictionnaire est un dictionnaire actif et le mot spécifié n'est pas dans un dictionnaire de base du système de reconnaissance vocale.

30. Système selon la revendication 24, dans lequel le dictionnaire est un dictionnaire actif, et l'amélioration comprend en outre un dictionnaire des dérivés couplé au générateur de dérivés, dans lequel le dictionnaire des dérivés comporte des liens pour identifier les mots qui sont dérivés d'une racine commune.

31. Système selon la revendication 30, dans lequel le système de reconnaissance vocale comporte un dictionnaire de base qui est structuré pour fournir le dictionnaire des dérivés.

32. Système selon la revendication 30, dans lequel le dictionnaire des dérivés associe des indications de distinction à des mots listés dans ledit dictionnaire, et dans lequel des indications de distinction sont associées aux éléments souhaités ajoutés par la disposition de mise à jour.

33. Système selon la revendication 24, dans lequel la disposition de mise à jour comprend une disposition de quantification de probabilités pour associer des données de probabilité d'occurrence à chaque élément souhaité.

34. Système selon la revendication 33, dans lequel la disposition de quantification de probabilités se réfère à un dictionnaire de base.

35. Système selon la revendication 33, dans lequel la disposition de quantification de probabilités comprend un générateur à base de règles.

36. Système selon la revendication 35, dans lequel le générateur à base règles fournit les données de probabilité d'occurrence pour un mot donné comme une fonction d'une caractéristique connue du mot donné.

37. Système selon la revendication 36, dans lequel la caractéristique connue est la catégorie de mots du mot donnée.

38. Système selon la revendication 36, dans lequel la disposition de quantification de probabilités affecte une valeur par défaut à chaque élément souhaité.

39. Système selon la revendication 24, comprenant en outre une seconde entrée pour désigner une catégorie de mots applicable au mot spécifié, dans lequel le générateur de dérivés comprend une disposition pour utiliser la catégorie comme une aide dans l'identification d'au moins un dérivé du mot spécifié.

40. Système selon la revendication 24, comprenant en outre un générateur de catégorie à base de règles couplé à l'entrée pour désigner une catégorie de mots applicable au mot spécifié, et dans lequel le générateur de dérivés comprend une disposition pour utiliser la catégorie comme une aide dans l'identification d'au moins un dérivé du mot spécifié.

41. Système selon la revendication 24, dans lequel la disposition de mise à jour comprend une disposition de différenciation d'après des caractéristiques pour associer des caractéristiques de différenciation à chaque élément souhaité de l'ensemble.

42. Système selon la revendication 41, dans lequel les caractéristiques de différenciation sont des indications de distinction.

43. Système selon la revendication 42, dans lequel les indications de distinction sont fournies par l'utilisateur.

44. Système selon la revendication 42, comprenant en outre un générateur à base de règles pour générer les indications de distinction.

45. Système selon la revendication 42, dans lequel les indications de distinction sont fournies par un dictionnaire de base.
